# EUROPEAN PATENT APPLICATION

(11) **EP 3 557 788 A1**
(43) Date of publication of application: **23.10.2019**
(21) Application number: 19168358.0
(22) Date of filing: 10.04.2019
(51) Int. Cl.: H04B 17/309, H04B 17/00

(54) **MEASUREMENT OF RF SIGNAL QUALITY PARAMETERS IN THREE DIMENSIONS**

(30) Priority: 17.04.2018 US 201815955238
(71) Applicant: ROSEMOUNT AEROSPACE INC., Burnsville, MN 55306-4898 (US)
(72) Inventor: DJUKNIC, Goran, New York, NY 10029 (US)
(74) Representative: Dehns

(57) **Abstract**

A system (10; 100) is presented for collecting measurements of wireless communication parameters throughout an environment. The system (10; 100) includes a wireless vehicle (14) and a test station (12). The vehicle (14) is configured to move through the environment, and has a radio disposed to receive a test signal and broadcast a reply signal. The test station (12) is configured to wirelessly communicate with and control the wireless vehicle (14), and includes a test signal transmitter (32), a reply signal receiver (38), and a data collection and processing system (16; 116). The data collection and processing system (16; 116) is configured to calculate wireless signal quality parameters characterizing signal quality between the test station (12) and the vehicle (14) at a plurality of locations of the vehicle (14) as the vehicle (14) moves through the environment, based on difference between the test signal and the reply signal at each location.

## Description

### BACKGROUND

The present invention relates generally to wireless communication, and more particularly to a system and method for measuring and mapping wireless parameters in a three dimensional space.

Signal quality for wireless communication is characterized by parameters such as electromagnetic (EM) field strength, propagation path loss, packet loss, and delay. These parameters can vary as a function of three dimensional position in an environment, e.g. as a function of the geometry of the environment, of wireless hub location within the environment, and of signal interference (noise) from wireless background. Understanding how these parameters vary as a function of position can be useful or even necessary when using or setting up wireless environments, but building a three dimensional map of signal parameters can be extremely time-consuming, demanding a large number of separate measurements taken at different locations, some of which can be hard to reach.

### SUMMARY

In one aspect, the present invention is directed toward a system for collecting measurements of wireless signal quality parameters throughout an environment. The system includes a wireless vehicle and a test station. The vehicle is configured to move through the environment, and has a radio disposed to receive a test signal and broadcast a reply signal. The test station is configured to wirelessly communicate with and control the wireless vehicle, and includes a test signal transmitter, a reply signal receiver, and a data collection and processing system. The data collection and processing system is configured to calculate wireless signal quality parameters characterizing signal quality between the test station and the vehicle at a plurality of locations of the vehicle as the vehicle moves through the environment, based on difference between the test signal and the reply signal at each location.

In another aspect, the present invention is directed towards a method for testing wireless parameters of an environment using a vehicle. According to this method, a wireless vehicle is directed to a three-dimensional measurement point in the environment, a test signal is transmitted from a test station to the wireless vehicle, and a reply signal is transmitted from the wireless vehicle to the test station in response to receipt of the test signal at the wireless vehicle. A measurement of wireless signal quality at the measurement location is generated and stored based on a comparison of the transmitted test signal and the received reply signal. This process is repeated across multiple measurement points until the environment has been fully mapped.

The present summary is provided only by way of example, and not limitation. Other aspects of the present disclosure will be appreciated in view of the entirety of the present disclosure, including the entire text, claims, and accompanying figures.

### BRIEF DESCRIPTION OF THE DRAWINGS

FIG. 1 is a schematic illustration of a wireless system for measuring communication parameters in three dimensions.
FIG. 2 is a schematic illustration of an alternative embodiment to the system of FIG. 1.
FIG. 3 is a flowchart illustrating a method of sensing and mapping wireless parameters in three dimensions.

While the above-identified figures set forth one or more embodiments of the present disclosure, other embodiments are also contemplated, as noted in the discussion. In all cases, this disclosure presents the invention by way of representation and not limitation. It should be understood that numerous other modifications and embodiments can be devised by those skilled in the art, which fall within the scope of the principles of the invention. The figures may not be drawn to scale, and applications and embodiments of the present invention may include features and components not specifically shown in the drawings.

### DETAILED DESCRIPTION

A system and method are presented herein for collecting measurements of wireless communication parameters across three dimensions within complex environments. A remotely controlled vehicle is guided through the environment via control commands transmitted over a first frequency band. The vehicle receives test signals from a data collection and processing system, and evaluates the quality of these received signals. The vehicle transmits response messages including evaluations of the test messages back to the data collection and processing system. The data collection and processing system uses these response messages to characterize environment in terms of wireless transmission parameters as the vehicle is controlled to traverse the full environment.

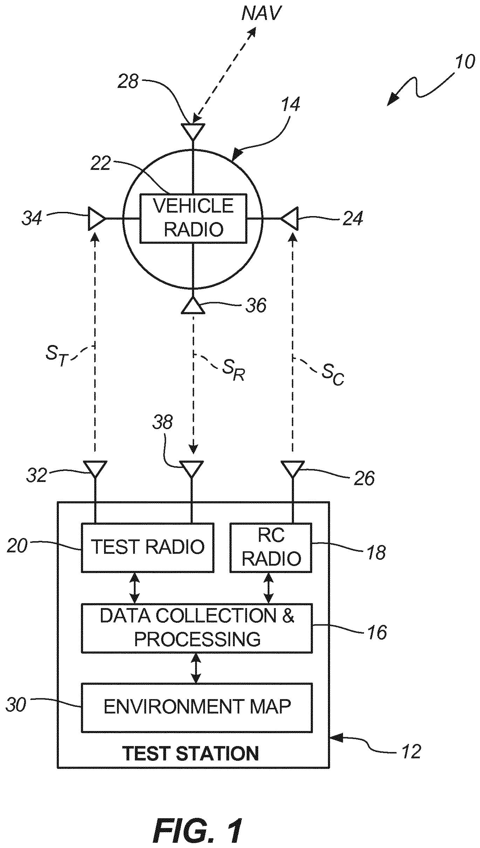

FIGs 1 is a schematic illustration of measurement system 10, a system for measuring communication parameters in three dimensions. Measurement system 10 includes test station 12 and vehicle 14. Test station 12 can, for example, be a stationary testing device accessed and operated by a human user. Test station 12 interfaces wirelessly with vehicle 14, which is a remotely controlled platform movable within the environment based on commands from test station 12. Vehicle 14 can, for example, be a quadcopter, car, or other drone device capable of traversing all relevant dimensions of the environment without need for additional equipment or setup.

Test station 12 includes data collection and processing device 16, a computer or other data processor that collects data regarding the measured communication parameters, and controls most aspects of system 10. Test station 18 also includes remote control (RC) radio 18 and at least one test radio 20, while vehicle 14 includes at least one vehicle radio 22. In some embodiments the functions of test radio 20 and vehicle radio 22 can be distributed across multiple devices. RC radio 18 communicates with vehicle radio 22 via control signals SC transmitted and received between vehicle control antenna 24 and station control antenna 26. Vehicle 14 moves within the environment based on received control signals SC, e.g. along a set or algorithmically generated path provided by test station 12, as described in greater detail hereinafter. Vehicle 14 can receive additional navigation information such as global position system (GPS) data or ultra-wide-wide band (UWB) navigation data via navigation antenna 28. This positioning information can be relayed to data collection and processing system 16 to allow vehicle 14 to be controlled based on its current position, either by manual operation or by automatic navigation to traverse the environment. In some embodiments test station 12 can include environment map 30, a coordinate-based or otherwise indexed map of the environment used by data collection and processing system 16 to direct vehicle 14 via RC radio 26. Environment map 30 can, for example, index the environment according to an arbitrary spatial grid. In at least some embodiments, vehicle 14 can be controlled autonomously by test station 12, without need for human operation. Test station 12 can, for example, direct vehicle 14 through a preset or algorithmically determined path based on environment map 30, so as to traverse the full extent of the environment with a desired spatial interval (i.e. resolution) of wireless parameter evaluation. Data collection and processing system 16 can, in some embodiments, direct movement of vehicle 14 to produce a higher or lower spatial resolution of measured wireless parameters based on the sensed character of local wireless parameters, e.g. commanding greater resolution in areas of higher interest (where parameters are highly variable as a function of spatial position, or where parameters fall within or deviate from expected values), or lower resolution in areas of less variation, to hasten surveying. For example, test station 12 can, in some embodiments, direct vehicle 14 to traverse an area more slowly (for a more granular evaluation of wireless parameters) if received signal strength or packet loss within that area fall above or below threshold values, respectively.

Data collection and processing system 16 evaluates wireless parameters at the location of vehicle 14 by communication between test radio 20 and vehicle radio 22 of test signal ST via test transmitter antenna 32 and test receiver antenna 34, and of reply signal SR via reply transmitter 36 and reply receiver 38. In the illustrated embodiment antennas 24, 26, 28, 32, 34, 36, and 38 are all distinct antennas. In other embodiments, however, some or all of the antenna functions of test station 12 and vehicle 14 can be performed via shared transmitter/receiver antennas. Test signal ST is a sample transmission including a series of discrete tones (frequency-modulated) and/or pulses (time modulated). The reception of test signal ST at vehicle radio 22 can be affected by environmental factors such as noise, signal attenuation, or interference. In Vehicle radio 22 retransmits the received signal ST (including any artifacts, distortions, or attenuations due to the environment) back to test radio 20 via antennas 36 and 38 as reply signal SR. Data collection and processing system 16 determines wireless parameters along this signal path (for the particular current location of vehicle 14) by comparing test signal ST as transmitted from antenna 32 with reply signal SR as received at antenna 38. Relevant parameters can include received signal strength and phase indication, packet loss or error rate, and other indicators of signal robustness. These parameters are recorded with respect to each spatial position of vehicle 14 polled by system 10. In some embodiments reply signal SR can be accompanied by return control signals SC including a position report as to the three dimensional location of vehicle 14 at the time of reception and transmission of signals ST and SR, respectively, based on navigation signals received via navigation antenna 28. In one embodiment, vehicle 14 moves in discrete intervals between polling locations, such that both test signal ST and reply signal SR are sent and received while vehicle 14 is stationary. Polling while stationary can reduce position uncertainty and eliminate signal artifacts due to travel speed and travel distance between signal reception and retransmission by vehicle 14. Polling while moving is also possible, but requires compensation for vehicle movement between transmissions and rapid and precise updating of position information (e.g. via navigation antenna 28).

Although one transmitter and one receiver antenna each are depicted for signals ST and SR, some embodiments of system 10 can included a plurality of antennas disposed at both test radio 20 and vehicle radio 22, e.g. in an array of spatially/orientationally diverse antennas. The wireless parameters discussed above can, in some embodiments, be recorded along each channel of such a diverse array to establish differences in performance based on orientation and position of antennas at both vehicle 14 and test station 12.

In some embodiments signals ST, SR, and SC are transmitted on non-overlapping frequency bands to avoid signal interference while permitting all of these signals to be transmitted concurrently or even continuously. In such embodiments, vehicle radio 22 frequency-shifts received test signal ST before retransmitting reply signal SR, and test radio 20 frequency-shifts received reply signal SR back to the frequency domain of original test signal ST for comparison with test signal ST to determine wireless signal parameters. In other embodiments, at least some of signals ST, SR, and SC can share common or overlapping frequency bands, so long as these signals are scheduled to be non-overlapping in time.

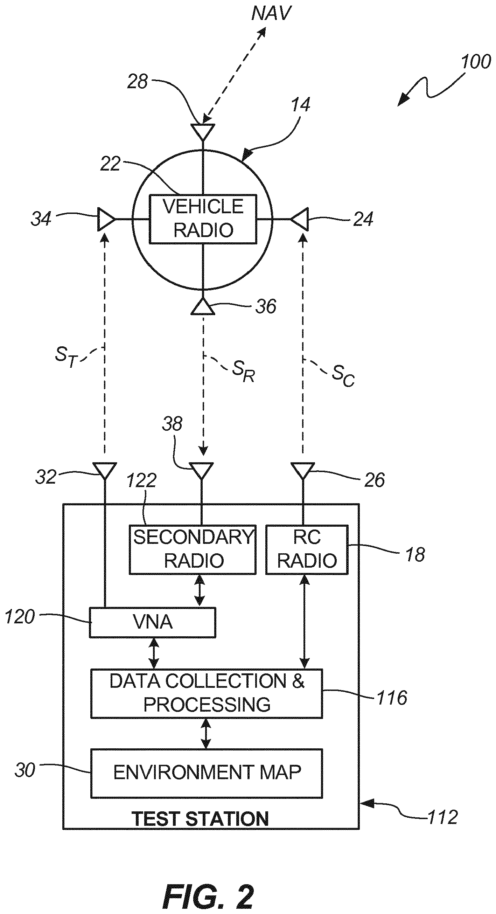

FIGs 2 is a schematic illustration of measurement system 100, a variation on system 10 of FIG. 1. System 100 differs from system 10 primarily in that test station 112 (analogous to test station 12 of system 10) includes vector network analyzer (VNA) 120 and secondary radio 122 in place of test radio 20, and data collection and processing system 116 (in place of system 16) is configured to receive vector analysis outputs from VNA 120. VNA 120 is radio frequency comparator that transmits test signal ST' via antennas 32 substantially as described above. Vehicle radio 22 receives test signal ST' and retransmits a frequency-shifted version of this received signal as reply signal SR', substantially as described above in one embodiment of system 10. Test signal ST' and reply signal SR' are transmitted substantially concurrently on different frequency bands. Secondary radio 122 reverses the frequency-shifting of reply signal SR' with respect to test signal ST', thereby permitting VNA 120 to directly compare test signal ST' to the resulting shifted reply signal. System 100 otherwise operates generally as described above with respect to system 10 of FIG. 1. Although test signal ST' and reply signal SR' are transmitted concurrently on separate frequency bands, control signals SC can be transmitted either on non-overlapping frequency bands or on frequency bands that may overlap with test signal ST' and reply signal SR'. If control signals SC fall within a frequency band that can overlap with test signal ST' and reply signal SR', control and testing/reply signals must be scheduled to be non-overlapping in time.

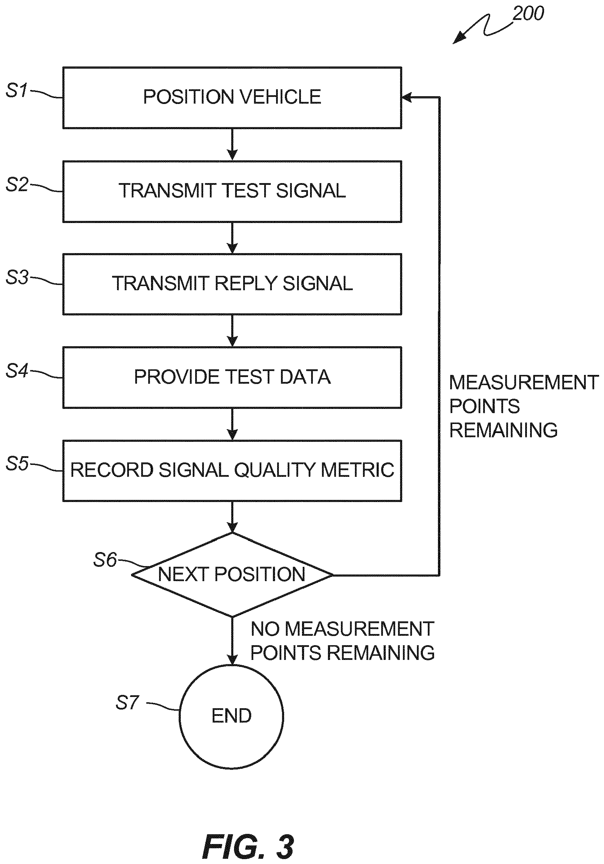

FIG. 3 is a method flowchart illustrating method 200, an embodiment of a method for sensing and mapping wireless parameters in three dimensions using systems 10 or 100.

According to method 200, data collection and processing system 16 or 116 controls vehicle 14 via RC radio 18, directing vehicle 14 to position itself at a first measurement point in the three dimensional environment, based on navigation data received by vehicle 14 via antenna 28. (Step S1). This first measurement point can, for example, be one of a preset group of measurement points registered with respect to environment map 30, or can be a location determined in the field by data collection and processing system 16/116 based on the shape of the environment and initial position of vehicle 14.

Test station 12/112 next transmits test signal ST/ST' via antenna 32 using test radio 20 or VNA 120. This test signal can, for example, comprise a series of discrete tones, or a sequence of short time pulses. (Step S2). This test signal is received by vehicle radio 22, which responds by transmitting reply signal SR/SR' (Step S3). Resulting test data is then transmitted to data collection and processing system 16/116. (Step S4). This test data can include test signal ST as transmitted by and reply signal SR as received by test radio 20, as discussed above with respect to FIG. 1 and system 10. Alternatively, this test data can include a vector analysis or comparison between test signal ST' and a phase-shifted version of reply signal SR' provided by secondary radio 122, as described above with respect to FIG. 2 and system 100. Data collection and processing system 16/116 generates received signal strength, packet loss rate, and/or packet error rate corresponding to the location of vehicle 14 based on this test data, and stores this wireless signal quality metric together with an identifier of the measurement point, e.g. with the environment map. (Step S5).

After recording signal quality metrics for the current position, data collection and processing system 16/116 determines the next testing location. (Step S6). As discussed above, this determination can be made by stepping through a list of pre-set testing locations, e.g. distributed across a coordinate grid covering the full three dimensional extent of the environment. In other embodiments, the determination of testing location can be performed during testing by data collection and processing system 16/116 based on environment map 30, and potentially based on previously determined signal quality metrics, e.g. for neighboring locations, as discussed above. Once the next position has been determined, vehicle 14 is signaled to reposition (Step 1), and the process repeats. Once no further measurement points remain, the process ends. (Step S7).

The present system and method provide means for rapidly, accurately, and efficiently testing wireless signal parameters across large three-dimensional environments with little or no need for human intervention. Vehicle 14 traverses the environment, and through communication with test station 16/116 allows signal quality metrics to be recorded with spatial resolution sufficient to map the wireless character of the environment.

### DISCUSSION OF POSSIBLE EMBODIMENTS

The following are non-exclusive descriptions of possible embodiments of the present invention.

A system for collecting measurements of wireless communication parameters throughout an environment, the system comprising: a wireless vehicle configured to move through the environment, the wireless vehicle having a radio disposed to receive a test signal and broadcast a reply signal; a test station configured to wirelessly communicate with and control the wireless vehicle, the test station comprising: a test signal transmitter configured to broadcast the test signal; a reply signal receiver configured to receive the reply signal; and a data collection and processing system configured to calculate wireless signal quality parameters characterizing communication between the test station and the vehicle at a plurality of locations of the vehicle as the vehicle moves through the environment, based on difference between the test signal and the reply signal at each location.

The system of the preceding paragraph can optionally include, additionally and/or alternatively, any one or more of the following features, configurations and/or additional components:
A further embodiment of the foregoing system, wherein the reply signals comprise retransmissions from the vehicle of the test signals, as received by the wireless vehicle.

A further embodiment of the foregoing system, wherein the test signal and reply signal are scheduled to be non-overlapping in time.

A further embodiment of the foregoing system, wherein the test signal and reply signal are transmitted continuously and concurrently, and wherein the reply signal is frequency-shifted with respect to the test signal, so as to be non-overlapping in frequency band.

A further embodiment of the foregoing system, wherein the test signal transmitter is a vector network analyzer (VNA), and the reply signal receiver is a secondary radio disposed to reverse the frequency-shifting of the reply signal with respect to the test signal and supply a resulting shifted reply signal to the VNA for comparison with the test signal.

A further embodiment of the foregoing system, wherein the wireless signal quality parameters include at least one of the group consisting of received signal strength, signal phase, packet loss, and error rate.

A further embodiment of the foregoing system, wherein the wireless vehicle is a remote-controlled vehicle configured to move in response to wireless control signals, and wherein the wireless vehicle further comprises a navigation antenna disposed to identify a location of the vehicle via wireless communication.

A further embodiment of the foregoing system, wherein the control signals are non-overlapping in frequency band with the test and reply signals.

A further embodiment of the foregoing system, wherein the test station further comprises a control radio disposed to communicate with the wireless vehicle via the control signals to direct movement of the vehicle.

A further embodiment of the foregoing system, further comprising a map module accessible to the data collection and processing system, the map module providing an indexed map of the environment for navigation.

A further embodiment of the foregoing system, wherein the wireless vehicle is controlled by the test station, based on the location of the vehicle and the indexed map, in an autonomous fashion.

A further embodiment of the foregoing system, wherein the data collection and processing system is capable of directing movement of the wireless vehicle to vary spatial resolution at which the wireless signal quality parameters are collected, based on local character of the wireless signal quality parameters.

A method of testing wireless parameters of an environment using a vehicle, the method comprising: directing a wireless vehicle to a three-dimensional measurement point in the environment; transmitting a test signal from a test station to the wireless vehicle; transmitting a reply signal from the wireless vehicle to the test station in response to receipt of the test signal at the wireless vehicle; generating and storing a measurement of wireless signal quality at the measurement location based on a comparison of the transmitted test signal and the received reply signal; and directing the wireless vehicle to subsequent measurements points for subsequent measurements of wireless signal quality until the environment has been fully mapped.

The method of the preceding paragraph can optionally include, additionally and/or alternatively, any one or more of the following features, configurations and/or additional components:
A further embodiment of the foregoing method, wherein directing the wireless vehicle comprises communicating with the wireless vehicle via a radio-frequency control signal that is non-overlapping with the test and reply signals in at least one of time and frequency.

A further embodiment of the foregoing method, wherein the control signal is generated by reference to an environment map.

A further embodiment of the foregoing method, wherein directing the wireless vehicle to subsequent measurement points comprises computing a next location for measurement based on the environment map and at least one measurement of wireless signal quality at a prior location.

A further embodiment of the foregoing method, wherein the test signal and the reply signal are non-overlapping in frequency.

A further embodiment of the foregoing method, wherein generating a measurement of wireless quality comprises first generating a vector analysis comparing the transmitted test signal to the received reply signal using a vector network analyzer (VNA), and wherein storing a measurement of wireless quality comprises storing a metric based on the vector analysis.

A further embodiment of the foregoing method, further comprising frequency-shifting the received reply signal into the frequency band of the transmitted test signal.

A further embodiment of the foregoing method, wherein the measurement of wireless signal quality is a measurement of received signal strength, signal phase, packet loss, or error rate.

### SUMMATION

Any relative terms or terms of degree used herein, such as "substantially", "essentially", "generally", "approximately" and the like, should be interpreted in accordance with and subject to any applicable definitions or limits expressly stated herein. In all instances, any relative terms or terms of degree used herein should be interpreted to broadly encompass any relevant disclosed embodiments as well as such ranges or variations as would be understood by a person of ordinary skill in the art in view of the entirety of the present disclosure, such as to encompass ordinary manufacturing tolerance variations, incidental alignment variations, alignment or shape variations induced by thermal, rotational or vibrational operational conditions, and the like.

While the invention has been described with reference to an exemplary embodiment(s), it will be understood by those skilled in the art that various changes may be made and equivalents may be substituted for elements thereof without departing from the scope of the invention. In addition, many modifications may be made to adapt a particular situation or material to the teachings of the invention without departing from the essential scope thereof. Therefore, it is intended that the invention not be limited to the particular embodiment(s) disclosed, but that the invention will include all embodiments falling within the scope of the appended claims.

## Claims

1. A system for collecting measurements of wireless communication parameters throughout an environment, the system comprising:
a wireless vehicle configured to move through the environment, the wireless vehicle having a radio disposed to receive a test signal and broadcast a reply signal;
a test station configured to wirelessly communicate with and control the wireless vehicle, the test station comprising:
a test signal transmitter configured to broadcast the test signal;
a reply signal receiver configured to receive the reply signal; and
a data collection and processing system configured to calculate wireless signal quality parameters characterizing communication between the test station and the vehicle at a plurality of locations of the vehicle as the vehicle moves through the environment, based on difference between the test signal and the reply signal at each location.

2. The system of claim 1, wherein the reply signals comprise retransmissions from the vehicle of the test signals, as received by the wireless vehicle.

3. The system of claim 1 or 2, wherein the test signal and reply signal are scheduled to be non-overlapping in time.

4. The system of claim 1 or 2, wherein the test signal and reply signal are transmitted continuously and concurrently, and wherein the reply signal is frequency-shifted with respect to the test signal, so as to be non-overlapping in frequency band, wherein, optionally, the test signal transmitter is a vector network analyzer (VNA), and the reply signal receiver is a secondary radio disposed to reverse the frequency-shifting of the reply signal with respect to the test signal and supply a resulting shifted reply signal to the VNA for comparison with the test signal.

5. The system of any preceding claim, wherein the wireless signal quality parameters include at least one of the group consisting of received signal strength, signal phase, packet loss, and error rate.

6. The system of any preceding claim, wherein the wireless vehicle is a remote-controlled vehicle configured to move in response to wireless control signals, and wherein the wireless vehicle further comprises a navigation antenna disposed to identify a location of the vehicle via wireless communication.

7. The system of claim 6, wherein the control signals are non-overlapping in frequency band with the test and reply signals.

8. The system of claim 6 or 7, wherein the test station further comprises a control radio disposed to communicate with the wireless vehicle via the control signals to direct movement of the vehicle.

9. The system of claim 8, further comprising a map module accessible to the data collection and processing system, the map module providing an indexed map of the environment for navigation,
wherein, optionally, the wireless vehicle is controlled by the test station, based on the location of the vehicle and the indexed map, in an autonomous fashion,
wherein, optionally, the data collection and processing system is capable of directing movement of the wireless vehicle to vary spatial resolution at which the wireless signal quality parameters are collected, based on local character of the wireless signal quality parameters.

10. A method of testing wireless parameters of an environment using a vehicle, the method comprising:
moving a wireless vehicle to a three-dimensional measurement point in the environment;
transmitting a test signal from a test station to the wireless vehicle;
transmitting a reply signal from the wireless vehicle to the test station in response to receipt of the test signal at the wireless vehicle; and
generating and storing a measurement of wireless signal quality at the measurement location based on a comparison of the transmitted test signal and the received reply signal.

11. The method of claim 10, wherein directing the wireless vehicle comprises communicating with the wireless vehicle via a radio-frequency control signal that is non-overlapping with the test and reply signals in at least one of time and frequency.

12. The method of claim 11, wherein the control signal is generated by reference to an environment map.

13. The method of claim 12, further comprising:
computing a next location for measurement based on the environment map and at least one measurement of wireless signal quality at a prior location; and
moving the wireless vehicle to the next location for a subsequent measurement of wireless signal quality.

14. The method of any of claims 10 to 13, wherein the test signal and the reply signal are non-overlapping in frequency,
wherein, optionally, generating a measurement of wireless quality comprises first generating a vector analysis comparing the transmitted test signal to the received reply signal using a vector network analyzer (VNA), and wherein storing a measurement of wireless quality comprises storing a metric based on the vector analysis.

15. The method of claim 14, further comprising frequency-shifting the received reply signal into the frequency band of the transmitted test signal.
